(19) Europäisches Patentamt
European Patent Office
Office européen des brevets

(11) **EP 2 720 066 B1**

(12) **FASCICULE DE BREVET EUROPEEN**

(45) Date de publication et mention de la délivrance du brevet:
**15.06.2016 Bulletin 2016/24**

(21) Numéro de dépôt: **13188369.6**

(22) Date de dépôt: **11.10.2013**

(51) Int Cl.:
*G01S 17/58* [(2006.01)]     *G01P 5/26* [(2006.01)]
*G01S 7/484* [(2006.01)]     *G01S 7/486* [(2006.01)]
*G01S 7/487* [(2006.01)]     *G01S 17/88* [(2006.01)]
*G01S 17/95* [(2006.01)]

(54) **Procédé d'estimation de la composante transversale de la vitesse de l'air dans une mesure lidar doppler**

Schätzverfahren des Queranteils der Luftgeschwindigkeit bei einer Lidar-Doppler-Messung

Method for estimating the transverse component of air speed in a Doppler lidar measurement

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.10.2012 FR 1202729**

(43) Date de publication de la demande:
**16.04.2014 Bulletin 2014/16**

(73) Titulaire: **Thales**
**92200 Neuilly Sur Seine (FR)**

(72) Inventeurs:
• **Lacondemine, Xavier**
**26300 Alixan (FR)**
• **Baral-Baron, Grégory**
**38180 Seyssins (FR)**
• **Schlotterbeck, Jean-Pierre**
**26300 Rochefort Samson (FR)**
• **Rondeau, Philippe**
**26400 Allex (FR)**

(74) Mandataire: **Delaval, Guillaume Laurent**
**Marks & Clerk France**
**Immeuble Visium**
**22, avenue Aristide Briand**
**94117 Arcueil Cedex (FR)**

(56) Documents cités:
**EP-A1- 2 270 518     EP-A2- 2 282 216**
**US-A- 5 164 784**

**Description**

L'invention concerne un procédé d'estimation de la composante transversale de la vitesse de l'air et s'applique notamment au domaine de l'anémométrie laser.

Il existe dans l'art antérieur des équipements embarqués permettant d'estimer la vitesse de l'air par rapport au porteur dudit dispositif. Le porteur est par exemple un aéronef.

En particulier, des LiDARs Doppler peuvent être utilisés pour mesurer la vitesse et la direction du vent par rétrodiffusion d'un faisceau laser sur des particules de type aérosol portées par le vent. Le décalage de fréquence entre l'onde émise et l'onde rétrodiffusée permet d'obtenir une information de vitesse longitudinale. La vitesse longitudinale est la composante de vitesse du vent selon l'axe de visée laser. La combinaison de mesures issues d'au moins trois axes de visée non coplanaires permet alors d'accéder aux trois composantes du vecteur vitesse.

Dans le domaine de l'aéronautique, un LiDAR Doppler génère habituellement un faisceau laser en utilisant une source laser, ledit faisceau étant focalisé à une certaine distance de l'aéronef. Les particules présentes dans l'atmosphère, c'est-à-dire les aérosols, rétrodiffusent le faisceau incident. La fréquence Doppler correspondant à l'écart entre la fréquence du faisceau rétrodiffusé et celle du faisceau incident est détectée par un interféromètre de manière caractériser la vitesse de l'aéronef par rapport au vent.

Le décalage de fréquence correspondant à la fréquence Doppler est directement proportionnel à la composante longitudinale de la vitesse relative du porteur par rapport à l'air, la composante longitudinale étant la composante selon l'axe de visée du laser.

On sait que la fréquence Doppler $f_{Doppler}$ a pour valeur :

$$f_{Doppler} = \frac{2 \times V_{long}}{\lambda}$$

expression dans laquelle :

- $V_{long}$ représente la projection sur l'axe de visée du laser du vecteur $V$ correspondant à la vitesse de l'aéronef par rapport à l'air;
- $\lambda$ représente la longueur d'onde du faisceau émis.

L'anémométrie laser Doppler est de plus en plus utilisée dans les systèmes d'estimation de la vitesse d'aéronefs car elle permet d'effectuer une mesure directe, à distance, sans élément protubérant et indépendamment des moyens conventionnels reposant essentiellement sur des mesures de pression.

On s'intéresse ici à un régime de fonctionnement particulier appelé régime monoparticule. Dans ce régime, le faisceau laser est fortement focalisé de manière à ce que chaque particule le traversant produise un signal détectable individuellement.

La demande de brevet EP2282216A2 décrit un tel procédé et système d'anémométrie mono-particule par Lidar.

Le signal généré lors de la traversée du faisceau laser gaussien par une particule est habituellement désigné par le mot anglais « burst ». Il peut être vu comme le produit d'un signal sinusoïdal de fréquence égale à la fréquence Doppler et d'une fenêtre gaussienne. La largeur de cette fenêtre gaussienne est fonction de la largeur du faisceau laser au point où la particule le traverse et de la vitesse transversale de la particule en ce même point.

Selon le point auprès duquel la particule croise le faisceau, la courbure des fronts d'onde du faisceau peut de surcroît induire une variation de la fréquence du signal rétrodiffusé autour de la fréquence Doppler. Le signal modulé en fréquence est alors désigné par le mot anglais « chirp ».

La vitesse relative du porteur par rapport à l'air peut être représentée par un vecteur $V$ exprimé dans un référentiel à trois dimensions. Une utilisation classique d'un faisceau laser ne permet d'obtenir que la projection de ce vecteur sur l'axe du faisceau.

Le module du vecteur représentatif de la vitesse de l'aéronef par rapport à la masse d'air qui le porte est appelé « vitesse air vraie ».

Pour estimer la vitesse air vraie habituellement désignée par l'acronyme TAS venant de l'expression anglo-saxonne « True Air Speed », une combinaison de mesures issues d'au moins trois faisceaux non coplanaires est donc requise.

L'émission simultanée d'une pluralité de faisceaux présente de nombreux inconvénients en pratique. En particulier, cela implique la mise en oeuvre de plusieurs télescopes d'émission/réception du faisceau dont l'intégration sur aéronef peut s'avérer contraignante et coûteuse.

De plus, la répartition de la puissance laser selon plusieurs axes de mesure est moins efficace en termes de sensibilité de détection.

Enfin, si les mesures sont effectuées dans une zone où la vitesse des particules est perturbée par le porteur, la détermination du module de la vitesse à partir de mesures effectuées en différents points peut s'avérer complexe.

Un but de l'invention est notamment de pallier les inconvénients précités.

A cet effet l'invention a pour objet un procédé d'estimation de la composante transversale $V_{trans}$ de la vitesse de l'air. Il comprend les étapes suivantes :

a. émettre un faisceau laser focalisé;

b. acquérir un signal électrique s(t) résultant du passage d'une particule au travers du faisceau en un point de passage;

c. analyser le signal s(t) de manière obtenir un spectrogramme faisant apparaître une tache allongée représentative dudit passage;

d. estimer la durée $D$ de traversée du faisceau laser par la particule et la pente $P$ de la tache;

e. déduire de la durée $D$ et de la pente $P$ la distance $z_0$ entre le point de traversée du faisceau et le point de focalisation;

f. déterminer le rayon $\omega(z_0)$ du faisceau au point de passage;

g. déduire la composante transversale $V_{trans}$ du rayon $\omega(z_0)$ et de la durée $D$.

Le signal électrique s(t) est par exemple produit par un detecteur optique illuminé par le mélange cohérent d'un faisceau de référence avec l'onde rétrodiffusée lors du passage

Selon un aspect de l'invention, une étape détermine la fréquence Doppler $f_{Doppler}$ de s(t) correspondant à l'écart entre la fréquence des faisceaux rétrodiffusés et le faisceau incident, la composante longitudinale de la vitesse de l'air étant déduite de cet écart.

La distance $z_0$ est déterminée en utilisant par exemple l'expression suivante :

$$z_{0i} = \frac{P_i \cdot D_i{}^2 \cdot \lambda \cdot z_R{}^2}{8 \cdot \omega_0{}^2}$$

dans laquelle :

$i$ est l'indice de la particule en cours pour laquelle la traversée de faisceau est analysée;

$\omega_0$ est le rayon au point de focalisation de faisceau laser émis ;

$\lambda$ est la longueur d'onde du faisceau émis;

et Zr est la longueur de Rayleigh associée au faisceau pouvant être calculée selon l'expression :

$$z_R = \frac{\pi . \omega_0^2}{\lambda}$$

Le rayon du faisceau est déterminé par exemple en utilisant l'expression :

$$z_{0i} = \frac{P_i \cdot D_i{}^2 \cdot \lambda \cdot z_R{}^2}{8 \cdot \omega_0{}^2}$$

dans laquelle :

$$z_R = \frac{\pi . \omega_0^2}{\lambda}$$

La durée $D$ est par exemple estimée en mesurant la largeur de la tache apparaissant dans le spectrogramme.

La pente $P$ de la tache est par exemple déterminée en utilisant l'expression suivante :

$$P = \frac{\int (f_{inst}(t) - f_{Doppler})(t - t_0)p(t)dt}{\int (t - t_0)^2 p(t)dt}$$

dans laquelle :

$t_0$ représente l'instant où l'amplitude du signal est maximale, la particule passant alors au plus près de l'axe du faisceau. Il peut être déterminée à l'aide d'un calcul de barycentre

$$t_0 = \frac{\iint t.S(t,f)dtdf}{\iint S(t,f)dtdf} \;;$$

$$f_{inst} = \frac{\int f.S(t,f)df}{\int S(t,f)df} \;;$$

$$p(t) = \int S(t,f)df.$$

Dans un mode de réalisation, la composante $V_{trans}$ est déterminée en utilisant l'expression suivante :

$$V_{trans_i} = \frac{2.\omega(z_{0i})}{D_i}$$

Le module V de la vitesse de l'air peut être déterminé en moyennant le module de la vitesse des particules ayant coupé le faisceau dans une plage prédéterminée de distance au point de focalisation tel que :

$$|z_0| < \text{Seuil\_z}_0$$

$\text{Seuil\_z}_0$ étant une valeur de seuil prédéterminée.

Selon un autre aspect de l'invention, l'analyse temps fréquence est réalisée à l'aide d'une transformée rapide FFT.

Le module V de la vitesse de l'air peut être estimé en utilisant l'expression suivante :

$$V = \sqrt{Vlong^2 + Vtrans^2}$$

L'invention a aussi pour objet un anémomètre comprenant un circuit d'émission d'un faisceau laser convergent et de réception des réflexions dudit faisceau dans son environnement et une unité de traitement, ledit anémomètre mettant en oeuvre le procédé décrit précédemment.

L'invention a aussi pour objet un programme d'ordinateur comportant des instructions pour l'exécution du procédé décrit précédemment, lorsque le programme est exécuté par un processeur.

D'autres caractéristiques et avantages de l'invention apparaîtront à l'aide de la description qui suit donnée à titre illustratif et non limitatif, faite en regard des dessins annexés parmi lesquels :

- la figure 1 donne un exemple de faisceau traversé par une particule sur lequel apparaissent les composantes transversales et longitudinales de la vitesse ;
- la figure 2 présente un procédé permettant d'estimer le module du vecteur *V* représentatif de la vitesse air;
- la figure 3 représente un exemple de spectrogramme sur lequel apparaissent les paramètres $f_{Doppler}$, *D* et *P* ;
- la figure 4 donne un exemple d'architecture pouvant être mise en oeuvre dans un dispositif d'anémométrie laser selon invention;

- la figure 5 illustre de manière simplifiée un mode de réalisation du module d'estimation de la vitesse vraie.

Le procédé selon l'invention permet d'accéder à la composante transversale des vitesses de particule traversant un unique faisceau d'un LiDAR fonctionnant en régime mono-particule. Le procédé exploite les caractéristiques temps-fréquence du signal résultant du passage d'une particule dans un faisceau laser de manière à déterminer le diamètre du faisceau au point où la particule l'a coupé. Ces caractéristiques temps-fréquence sont par exemple la pente, la variation de fréquence et la durée de traversée. Il est alors possible de déduire la composante transversale de la vitesse du diamètre estimé et de la durée de traversée. Enfin, en combinant la vitesse transversale et la vitesse longitudinale, on en déduit le module de la vitesse d'une particule individuelle traversant le faisceau d'un LiDAR.

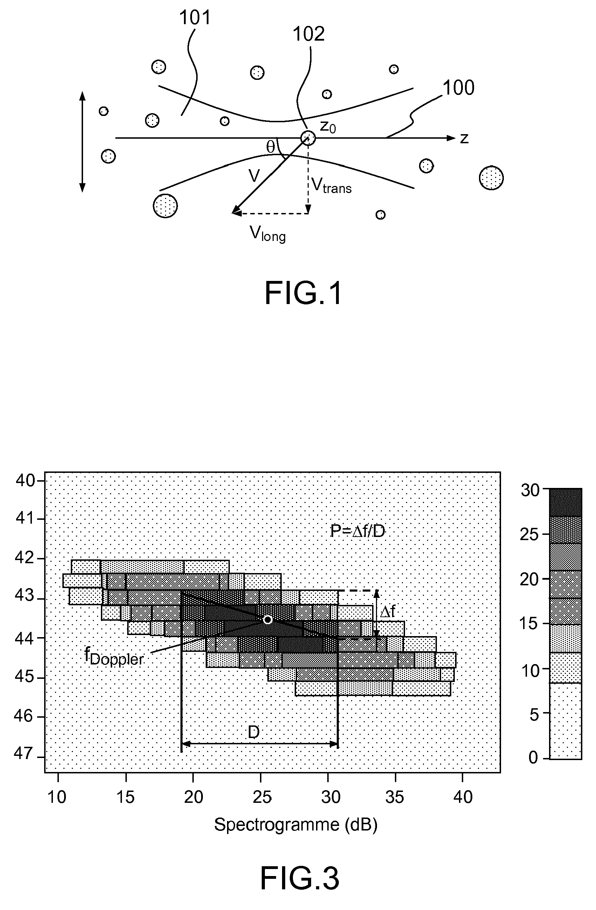

La figure 1 donne un exemple de faisceau traversé par une particule sur lequel apparaissent les composantes transversales et longitudinales de la vitesse.

La portion de faisceau représentée est centrée autour du point de focalisation du faisceau, c'est-à-dire autour de l'emplacement où le rayon du faisceau laser est minimal. Cet emplacement est habituellement désigné par le mot anglais « waist ».

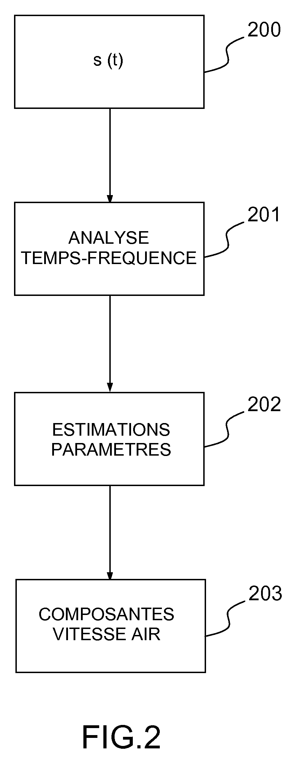

L'axe 100 est l'axe de propagation du faisceau laser. Dans cet exemple, le LiDAR fonctionne en régime mono-particule ce qui implique que le faisceau laser émis 101 est convergent. Une particule de type aérosol 102 traversant le faisceau à une distance $z_0$ de son point de focalisation est représentée. Lorsque la particule traverse le faisceau, un signal résultant de la rétrodiffusion du faisceau laser peut être utilisé pour déterminer les composantes d'un vecteur V représentatif de la vitesse air. Deux composantes de ce vecteur sont représentées sur la figure 2. La première composante est la composante de vitesse longitudinale $V_{long}$ déjà explicitée et la seconde est la composante de vitesse transversale $V_{trans}$. La composante de vitesse transversale $V_{trans}$ correspond à la projection orthogonale du vecteur V dans le plan orthogonal à l'axe 100 du faisceau laser.

La figure 2 présente un procédé permettant d'estimer le module du vecteur V représentatif de la vitesse air.

Pour cela, une étape 200 est mise en oeuvre de manière à acquérir un signal électrique s(t) résultant du passage d'une particule dans le faisceau laser.

Dans la suite de la description, on considère un faisceau laser gaussien de rayon $\omega_0$ au point de focalisation et de longueur d'onde $\lambda$. On considère également une particule d'indice i, animée d'une vitesse $V_i$ et coupant le faisceau à une distance $z_{0i}$ du point de focalisation.

L'amplitude du signal électrique résultant du passage d'une particule dans le faisceau laser en un point donné appelé point de passage est un chirp linéaire s(t) d'enveloppe gaussienne dont l'expression simplifiée est donnée ci-dessous :

$$s(t) = A_0 . \exp\left(-\frac{8.(t-t_0)^2}{D^2}\right).\cos\left(2\pi\left(f_{Doppler}(t-t_0) + P\frac{(t-t_0)^2}{2}\right) + \Phi_0\right)$$

Dans une deuxième étape 201, une analyse temps-fréquence du signal s(t) est réalisée. Cette analyse peut être effectuée pour obtenir un spectrogramme, c'est-à-dire un diagramme associant un spectre fréquentiel de s(t) à différents instants t. Pour le déterminer, une transformée de Fourier rapide FFT, acronyme venant de l'expression anglo-saxonne « Fast Fourier Transform », peut être utilisée. Lors de la traversée du faisceau par la particule, l'analyse du signal s(t) fait apparaître une tache allongée dans le spectrogramme.

Le résultat de l'analyse temps-fréquence de s(t) est alors traité 202 afin d'obtenir un ensemble d'estimations représentatif de la traversée du faisceau par la particule, en particulier :

- la fréquence centrale de s(t) qui est égale à la fréquence Doppler $f_{Doppler_i}$ du chirp;

- la durée $D_i$ de traversée du faisceau par la particule au point de passage pouvant être définie définie, par convention, comme la durée pendant laquelle l'amplitude du signal retrodiffusé est supérieure ou égale à $1/e^2$ de l'amplitude crête, où e représente le nombre d'Euler défini par e=exp(1)~2.718 ou encore comme la base du logarithme naturel c'est-à-dire tel que ln(e) = 1 ;

- la pente $P_i$ de la tache allongée représentative de s(t) dans le spectrogramme ou plus rigoureusement la vitesse de variation de la fréquence au cours du temps.

Ces paramètres sont alors utilisés pour déterminer 202 les composantes de la vitesse air.

La fréquence Doppler $f_{Doppler_i}$ est utilisée pour déterminer la composante longitudinale de la vitesse air. Pour cela, l'expression suivante peut être utilisée :

$$V_{long_i} = \frac{\lambda}{2} f_{Doppler_i}$$

Les paramètres $D_i$ et $P_i$ sont utilisés à l'étape suivante pour déterminer la composante transversale de la vitesse air. Dans un premier temps, la distance $z_{0i}$ au point de focalisation se déduit de la pente $P_i$ et de la durée $D_i$ en utilisant par exemple l'expression suivante :

$$z_{0i} = \frac{P_i \cdot D_i{}^2 \cdot \lambda \cdot z_R{}^2}{8 \cdot \omega_0{}^2}$$

dans laquelle :

$$z_R = \frac{\pi . \omega_0^2}{\lambda}$$

Dans un deuxième temps, le rayon du faisceau à l'endroit de traversée du faisceau par la particule est calculé à partir de la distance au point de focalisation $z_{0i}$. Pour cela, l'expression suivante peut être utilisée:

$$\omega(z_{0i}) = \omega_0 \sqrt{1 + \left(\frac{z_{0i}}{z_R}\right)^2}$$

Il est alors possible de déterminer la composante transversale de la vitesse air, l'expression suivante pouvant être utilisée :

$$V_{trans_i} = \frac{2 . \omega(z_{0i})}{D_i}$$

Enfin, le module de la vitesse air (TAS) est déterminé 203 en moyennant le module de la vitesse des particules ayant coupé le faisceau dans une plage prédéterminée de distance entre le point de passage et le point de focalisation tel que :

$$|z_0| < Seuil\_z_0$$

Cette moyenne peut s'effectuer sur un horizon temporel compatible avec la bande passante, typiquement 50 ms pour une bande passante de 10 Hz.

Le seuil Seuil_$z_0$ peut être choisi tel que $z_0 = z_R$ soit environ 5 mm pour $\omega_0 = 50\ \mu$m.

La figure 3 représente un exemple de spectrogramme sur lequel apparaissent les paramètres $f_{Doppler}$, $D$ et $P$.

Sur cet exemple de spectrogramme, l'évolution du temps est représentée en abscisse et les fréquences en ordonnée. Le temps est exprimé en microsecondes et les fréquences en mégahertz.

L'amplitude du spectrogramme est représentée par une échelle de gris 301 de manière à faire apparaître différentes plages d'amplitudes exprimées en décibels.

Cet exemple de spectrogramme représente une mesure effectuée pendant le passage d'une particule de type aérosol au travers du faisceau laser émis. Une tache allongée apparaît en gris foncé et représente le chirp résultant du passage de la particule dans le faisceau.

La fréquence centrale de cette tache correspond à la fréquence Doppler $f_{Doppler}$ et si l'on note S(t, f) la valeur du spectrogramme au temps $t$ et à la fréquence $f$, elle peut-être déterminée à partir d'un calcul de barycentre avec l'expression suivante :

$$f_{Doppler} = \frac{\iint f.S(t,f)dtdf}{\iint S(t,f)dtdf}$$

La durée D de traversée du faisceau par une particule se déduit de l'expression suivante :

$$\sigma^2 = E[t^2] - E[t]^2 = \frac{\iint (t-t_0)^2.S(t,f)dtdf}{\iint S(t,f)dtdf}$$

Dans laquelle :

σ représente l'écart-type temporel;
E[.] représente la fonction espérance.

On s'intéresse habituellement à la durée à $1/e^2$ du maximum valant D=4σ.

La pente $P$ de la tache se déduit de l'expression suivante :

$$P = \frac{\int (f_{inst}(t) - f_{Doppler})(t - t_0)p(t)dt}{\int (t - t_0)^2 p(t)dt}$$

dans laquelle :

- $t_0$ représente l'instant où l'amplitude du signal est maximale, la particule passant alors au plus près de l'axe du faisceau. Il peut être déterminée à l'aide d'un calcul de barycentre

$$t_0 = \frac{\iint t.S(t,f)dtdf}{\iint S(t,f)dtdf} \; ;$$

- 

$$f_{inst} = \frac{\int f.S(t,f)df}{\int S(t,f)df} \; ;$$

- 

$$p(t) = \int S(t,f)df.$$

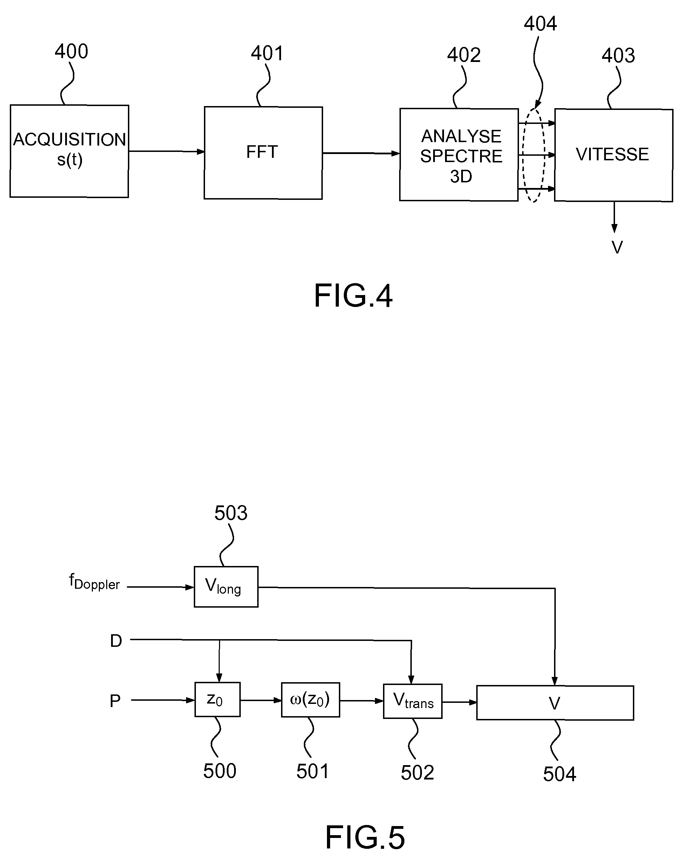

La figure 4 donne un exemple d'architecture pouvant être mise en oeuvre dans un dispositif d'anémométrie laser selon invention.

Un premier module 400 a pour fonction d'acquérir le signal s(t). Pour cela, des moyens bien connus de l'homme du métier peuvent être utilisés pour recevoir le signal optique résultant de la réflexion du faisceau laser sur la particule ainsi que des moyens pour convertir ledit signal optique en un signal électrique et le numériser. Le signal s(t) est mis en forme de manière à ce que sa fréquence centrale soit sensiblement égale à la fréquence Doppler.

Une fois que le signal s(t) est disponible, un module 401 réalisant une transformée de Fourier rapide désigné habituellement par l'acronyme FFT venant de l'expression anglo-saxonne « Fast Fourier Transform » est utilisé. Ce module met en forme les résultats obtenus après la transformée de manière à obtenir un spectrogramme tel que celui présenté à l'aide de la figure 3.

Un module 402 peut alors analyser le spectrogramme de manière à obtenir une estimation 404 des paramètres $f_{Doppler}$, D et $P$ comme décrit précédemment.

Les paramètres ainsi estimés 404 sont ensuite traités par un module 403 d'estimation de la vitesse vraie V.

La figure 5 illustre de manière simplifiée un mode de réalisation du module 403 d'estimation de la vitesse vraie.

Les paramètres estimés $f_{Doppler}$, D et $P$ sont utilisés en entrée de ce module.

*D* et *P* sont utilisés pour estimer successivement la distance entre le lieu de traversée du faisceau par la particule et le point de focalisation $z_0$ 500, le rayon du faisceau au niveau de la particule de type aérosol $\omega(z_0)$ 501 et la composante transversale $V_{trans}$ 502 comme décrit précédemment.

La fréquence $f_{Doppler}$ est utilisée en parallèle pour estimer 503 la composante longitudinale $V_{long}$.

Le module de la vitesse vraie peut ensuite être estimé 504 en utilisant le théorème de Pythagore :

$$V = \sqrt{Vlong^2 + Vtrans^2}$$

**Revendications**

1. Procédé d'estimation de la composante transversale $V_{trans}$ de la vitesse de l'air comprenant les étapes suivantes:

    a. émettre un faisceau laser focalisé ;
    b. acquérir (200) un signal électrique s(t) résultant du passage d'une particule d'indice i au travers du faisceau en un point de passage ;
    c. analyser (201) le signal s(t) de manière à obtenir un spectrogramme faisant apparaître une tache allongée représentative dudit passage ;
    d. estimer (202) la durée $D_i$ de traversée du faisceau laser par la particule et la pente $P_i$ de la tache ;
    e. déduire de la durée $D_i$ et de la pente $P_i$ la distance $z_{0i}$ entre le point de traversée du faisceau et le point de focalisation ;
    f. déterminer le rayon $\omega(z_{0i})$ du faisceau au point de passage;
    g. déduire la composante transversale $V_{trans}$ (203) du rayon $\omega(z_{0i})$ et de la durée $D_i$, en utilisant l'expression suivante:

$$V_{trans_i} = \frac{2.\omega(z_{0i})}{D_i}$$

2. Procédé selon la revendication 1 dans lequel une étape détermine la fréquence Doppler $f_{Doppler}$ de s(t) correspondant à l'écart entre la fréquence des faisceaux rétrodiffusé et le faisceau incident, la composante longitudinale de la vitesse de l'air étant déduite de cet écart.

3. Procédé selon l'une des revendications précédentes dans lequel la distance $z_0$ est déterminée en utilisant l'expression suivante :

$$z_{0i} = \frac{P_i \cdot D_i{}^2 \cdot \lambda \cdot z_R{}^2}{8 \cdot \omega_0{}^2}$$

dans laquelle :

    *i* est l'indice de la particule en cours pour laquelle la traversée de faisceau est analysée;
    $\omega_0$ est le rayon au point de focalisation de faisceau laser émis; $\lambda$ est la longueur d'onde du faisceau émis ;
    et Zr est la longueur de Rayleigh associée au faisceau qui peut être calculée selon l'expression :

$$z_R = \frac{\pi.\omega_0^2}{\lambda}$$

4. Procédé selon l'une des revendications précédentes dans lequel le rayon du faisceau est déterminé en utilisant l'expression :

$$z_{0i} = \frac{P_i \cdot D_i{}^2 \cdot \lambda \cdot z_R{}^2}{8 \cdot \omega_0{}^2}$$

dans laquelle :

$$z_R = \frac{\pi . \omega_0^2}{\lambda}$$

5. Procédé selon l'une des revendications précédentes dans lequel la durée $D$ est estimée en mesurant la largeur de la tache apparaissant dans le spectrogramme.

6. Procédé selon l'une des revendications précédentes dans lequel la pente $P$ de la tache est déterminée en utilisant l'expression suivante :

$$P = \frac{\int \left( f_{inst}(t) - f_{Doppler} \right)(t - t_0)\, p(t)\, dt}{\int (t - t_0)^2\, p(t)\, dt}$$

dans laquelle :

$t_0$ représente l'instant où l'amplitude du signal est maximale, la particule passant alors au plus près de l'axe du faisceau. Il peut être déterminée à l'aide d'un calcul de barycentre

$$t_0 = \frac{\iint t.S(t,f)\, dt\, df}{\iint S(t,f)\, dt\, df}\ ;$$

$$f_{inst} = \frac{\int f.S(t,f)\, df}{\int S(t,f)\, df}\ ;$$

$$p(t) = \int S(t,f)\, df.$$

7. Procédé selon l'une des revendication précédentes dans lequel le module V de la vitesse de l'air est déterminé (203) en moyennant le module de la vitesse des particules ayant coupé le faisceau dans une plage prédéterminée de distance au point de focalisation tel que :

$$|z_0| < \text{Seuil\_}z_0$$

Seuil\_$z_0$ étant une valeur de seuil prédéterminée.

8. Procédé selon l'une des revendications précédentes dans lequel l'analyse temps fréquence est réalisée à l'aide d'une transformée rapide FFT (401).

9. Procédé selon l'une des revendications précédentes dans lequel le module V de la vitesse de l'air est estimé (504) en utilisant l'expression suivante :

$$V = \sqrt{Vlong^2 + Vtrans^2}$$

10. Anémomètre comprenant un circuit d'émission d'un faisceau laser convergent et de réception des réflexions dudit faisceau dans son environnement et une unité de traitement, ledit anémomètre mettant en oeuvre le procédé selon l'une des revendications précédentes.

11. Programme d'ordinateur comportant des instructions pour l'exécution du procédé selon l'une quelconque des revendications 1 à 9, lorsque le programme est exécuté par un processeur.

**Patentansprüche**

1. Verfahren zum Schätzen der Querkomponente $V_{trans}$ der Geschwindigkeit von Luft, das die folgenden Schritte beinhaltet:

   a. Emittieren eines fokussierten Laserstrahls;
   b. Erfassen (200) eines elektrischen Signals s(t), das von der Passage eines Partikels mit Index i durch den Strahl an einem Passagepunkt resultiert;
   c. Analysieren (201) des Signals s(t), um ein Spektrogramm zu erhalten, das eine die Passage repräsentierende längliche Markierung erscheinen lässt;
   d. Schätzen (202) der Dauer $D_i$ der Passage des Partikels durch den Laserstrahl und der Neigung $P_i$ der Markierung;
   e. Ableiten, von der Dauer $D_i$ und der Neigung $P_i$, des Abstands $Z_{0i}$ zwischen dem Passagepunkt des Strahls und dem Fokussierpunkt;
   f. Ermitteln des Radius $\omega(Z_{0i})$ des Strahls am Passagepunkt;
   g. Ableiten der Querkomponente $V_{trans}$ (203) des Radius $\omega(Z_{0i})$ und der Dauer $D_i$ anhand des folgenden Ausdrucks:

$$V_{trans_i} = \frac{2.\omega(z_{0i})}{D_i}$$

2. Verfahren nach Anspruch 1, bei dem ein Schritt die Doppler-Frequenz $f_{Doppler}$ von s(t) ermittelt, die der Abweichung zwischen der Frequenz der rückgestreuten Strahlen und dem Einfallsstrahl entspricht, wobei die Längskomponente der Geschwindigkeit der Luft von dieser Abweichung abgeleitet wird.

3. Verfahren nach einem der vorherigen Ansprüche, wobei der Abstand $z_0$ anhand des folgenden Ausdrucks ermittelt wird:

$$z_{0i} = \frac{P_i \cdot D_i{}^2 \cdot \lambda \cdot z_R{}^2}{8 \cdot \omega_0{}^2}$$

wobei:

   $i$ der Index des laufenden Partikels ist, dessen Strahlpassage analysiert wird;
   $\omega_0$ der Radius des Fokussierpunkts des emittierten Laserstrahls ist;
   $\lambda$ die Wellenlänge des emittierten Strahls ist; und
   Zr die mit dem Strahl assoziierte Rayleigh-Länge ist, die anhand des folgenden Ausdrucks berechnet werden kann:

$$z_R = \frac{\pi.\omega_0^2}{\lambda}.$$

4. Verfahren nach einem der vorherigen Ansprüche, wobei der Radius des Strahls anhand des folgenden Ausdrucks ermittelt wird:

$$z_{0i} = \frac{P_i \cdot D_i{}^2 \cdot \lambda \cdot z_R{}^2}{8 \cdot \omega_0{}^2},$$

wobei:

$$z_R = \frac{\pi . \omega_0^2}{\lambda}.$$

5. Verfahren nach einem der vorherigen Ansprüche, wobei die Dauer *D* durch Messen der Breite der in dem Spektrogramm erscheinenden Markierung geschätzt wird.

6. Verfahren nach einem der vorherigen Ansprüche, wobei die Neigung *P* der Markierung anhand des folgenden Ausdrucks ermittelt wird:

$$P = \frac{\int \left( f_{inst}(t) - f_{Doppler} \right)(t - t_0) p(t) dt}{\int (t - t_0)^2 p(t) dt},$$

wobei:

$t_0$ den Zeitpunkt repräsentiert, an dem die Amplitude des Signals maximal ist, wobei der Partikel dann am nächsten an der Achse des Strahls passiert. Er kann anhand einer Berechnung des Baryzentrums ermittelt werden:

$$t_0 = \frac{\iint t . S(t, f) dt df}{\iint S(t, f) dt df};$$

$$f_{inst} = \frac{\int f . S(t,f) df}{\int S(t,f) df};$$

$$p(t) = \int S(t,f) df.$$

7. Verfahren nach einem der vorherigen Ansprüche, wobei das Modul V der Geschwindigkeit der Luft durch Mitteln des Moduls der Geschwindigkeit der Partikel ermittelt (203) wird, die den Strahl in einem vorbestimmten Entfernungsbereich vom Fokussierpunkt geschnitten haben, so dass:

$$|Z_0| < \text{Schwelle\_}Z_0 \text{ ist,}$$

wobei Schwelle_$Z_0$ ein vorbestimmter Schwellenwert ist.

8. Verfahren nach einem der vorherigen Ansprüche, wobei die Zeit-Frequenz-Analyse mit einer Fast Fourier Transformation (FFT) (401) durchgeführt wird.

9. Verfahren nach einem der vorherigen Ansprüche, wobei das Modul V der Geschwindigkeit der Luft anhand des folgenden Ausdrucks geschätzt (504) wird:

$$V = \sqrt{Vlong^2 + Vtrans^2}\,.$$

10. Anemometer, das eine Schaltung zum Emittieren eines konvergierenden Laserstrahls und zum Empfangen von Reflexionen des Strahls in seiner Umgebung und eine Verarbeitungseinheit umfasst, wobei das Anemometer das Verfahren nach einem der vorherigen Ansprüche implementiert.

11. Computerprogramm, das Befehle zum Ausführen des Verfahrens nach einem der Ansprüche 1 bis 9 umfasst, wenn das Programm von einem Prozessor ausgeführt wird.

**Claims**

1. A method for estimating the transverse component $V_{trans}$ of air speed, comprising the following steps:

   a. emitting a focused laser beam;
   b. acquiring (200) an electrical signal s(t) that results from the passage of a particle of index i through the beam at a point of passage;
   c. analysing (201) said signal s(t) so as to obtain a spectrogram highlighting an elongate mark representing said passage;
   d. estimating (202) the duration $D_i$ of the passage of the laser beam through the particle and the slope $P_i$ of the mark;
   e. deducing, from the duration $D_i$ and the slope $P_i$, the distance $Z_{0i}$ between the point of passage of the beam and the focusing point;
   f. determining the radius $\omega(Z_{0i})$ of the beam at the point of passage;
   g. deducing the transverse component $V_{trans}$ (203) of said radius $\omega(Z_{0i})$ and the duration $D_i$ using the following expression:

$$V_{trans_i} = \frac{2.\omega(z_{0i})}{D_i}\,.$$

2. The method according to claim 1, wherein a step determines the Doppler frequency $f_{Doppler}$ of s(t) that corresponds to the deviation between the frequency of the backscattered beams and the incident beam, with the longitudinal component of the air speed being deduced from this deviation.

3. The method according to any one of the preceding claims, wherein the distance $z_0$ is determined using the following expression:

$$z_{0i} = \frac{P_i \cdot D_i{}^2 \cdot \lambda \cdot z_R{}^2}{8 \cdot \omega_0{}^2}$$

where:

   $i$ is the index of the current particle for which the passage of the beam is analysed;
   $\omega_0$ is the radius at the focusing point of the emitted laser beam;
   $\lambda$ is the wavelength of the emitted beam; and
   Zr is the Rayleigh length associated with the beam, which length can be computed using the following expression:

$$z_R = \frac{\pi.\omega_0^2}{\lambda}\,.$$

4. The method according to any one of the preceding claims, wherein the radius of the beam is determined using the following expression:

$$z_{0i} = \frac{P_i \cdot D_i^{\,2} \cdot \lambda \cdot z_R^{\,2}}{8 \cdot \omega_0^{\,2}} \; ,$$

where:

$$z_R = \frac{\pi . \omega_0^2}{\lambda} \; .$$

5. The method according to any one of the preceding claims, wherein the duration $D$ is estimated by measuring the width of the mark that appears in the spectrogram.

6. The method according to any one of the preceding claims, wherein the slope $P$ of the mark is determined using the following expression:

$$P = \frac{\int \left(f_{inst}(t) - f_{Doppler}\right)(t - t_0) p(t) dt}{\int (t - t_0)^2 p(t) dt} \; ,$$

where:

$t_0$ represents the instant at which the amplitude of the signal is maximal, with the particle then passing closest to the axis of the beam. It can be determined using a barycentre computation:

$$t_0 = \frac{\iint t . S(t, f) dt df}{\iint S(t, f) dt df} \; ;$$

$$f_{inst} = \frac{\int f . S(t, f) df}{\int S(t, f) df} \; ;$$

$$p(t) = \int S(t, f) df .$$

7. The method according to any one of the preceding claims, wherein the modulus V of the air speed is determined (203) by averaging the modulus of the speed of the particles that have cut the beam at a predetermined range of distance to the focusing point such that:

$$|Z_0| < \text{Threshold\_}Z_0,$$

with Threshold_$Z_0$ being a predetermined threshold value.

8. The method according to any one of the preceding claims, wherein the time-frequency analysis is carried out using a Fast Fourier Transform (FFT) (401).

9. The method according to any one of the preceding claims, wherein the modulus V of the air speed is estimated (504) using the following expression:

$$V = \sqrt{Vlong^2 + Vtrans^2}$$

10. An anemometer comprising a circuit for emitting a convergent laser beam and for receiving reflections from said beam in its environment and a processing unit, said anemometer implementing the method according to any one of the preceding claims.

11. A computer programme comprising instructions for executing the method according to any one of claims 1 to 9, when said programme is executed by a processor.

**14**

FIG.1

FIG.3

s (t) — 200

ANALYSE TEMPS-FREQUENCE — 201

ESTIMATIONS PARAMETRES — 202

COMPOSANTES VITESSE AIR — 203

FIG.2

FIG.4

FIG.5

**EP 2 720 066 B1**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2282216 A2